# EUROPEAN PATENT APPLICATION

(11) **EP 3 006 211 A1**
(43) Date of publication of application: **13.04.2016**
(21) Application number: 14808035.1
(22) Date of filing: 03.06.2014
(51) Int. Cl.: B32B 27/40, B32B 27/00

(54) **DECORATIVE MOULDING FILM, AND DECORATIVE MOULDED ARTICLE**

(30) Priority: 04.06.2013 JP 2013117502
(71) Applicant: Toray Industries, Inc., Tokyo, 103-8666 (JP)
(72) Inventor: MORI, Kentaro, Otsu-shi Shiga 520-8558 (JP); MINOMO, Katsuhiro, Otsu-shi Shiga 520-8558 (JP); MATSUI, Yosuke, Kyoto-shi Kyoto 605-0995 (JP)
(74) Representative: Kador & Partner
(86) International application number: PCT/JP2014/064706
(87) International publication number: WO 2014/196516

(57) **Abstract**

Provided is a decorative molding film having good stretchability suitable for the film decoration method and including a protective layer with good scratch resistance.

A decorative molding film having a laminated structure in which a protective layer is disposed on at least one surface of a substrate film, wherein the substrate film has a structure in which a layer comprising a resin PA (PA layer) and a layer comprising a resin PB (PB layer) are alternately laminated each by at least 50 layers, each layer having a thickness of 0.03 µm to 0.5 µm, wherein the resin PA and the resin PB have different average in-plane refractive indices, the average in-plane refractive index of the resin PA being relatively higher than the average in-plane refractive index of the resin PB, and the protective layer comprises a polyurethane resin (U) formed from at least an active hydrogen component (A) and an organic isocyanate component (B) and having a polycarbonate skeleton containing an alicyclic hydrocarbon group, and satisfies at least one of Condition (1) and Condition (2).
Condition (1): the polyurethane resin (U) contains an alkoxysilyl group and/or a silanol group in its molecule.
Condition (2): the polyurethane resin (U) contains a carboxyl group and/or a salt thereof, and the protective layer further contains a compound (X) containing a glycidyl ether group, and an alkoxysilyl group and/or a silanol group.

## Description

### Technical Field

The present invention relates to a decorative molding film used in providing a film decoration to a decoration object used in building materials, cellular phones, electrical appliances, game machine components, automotive parts, and the like, and a decorative molded article obtained using the same. The invention relates to a decorative molding film having good conformability to a decoration object of complicated shape, e.g., deep-drawn shape and being less prone to surface damage, and a decorative molded article obtained using the same.

### Background Art

For decoration objects in building materials, cellular phones, electrical appliances, game machine components, automotive parts, and the like, woodgrain, cloth-like, metallic, and other various decorations have recently been used to improve aesthetic design, and in recent years, materials having a metallic appearance obtained by plating an injection-molded resin have been increasingly used. However, with the increasing interest in environmental issues, environmental effects of a plating solution in a chemical solution tank used in plating a resin have been regarded as problematic. In particular, it is necessary to work on the prevention of leakage of the plating solution, and furthermore, there is a movement afoot to regulate the plating solution itself.

Under such circumstances, as a metallic molding material replacing plating, a film decoration method has been increasingly used in which a decorative molding film produced, for example, by metallizing a polyester film is stuck to a decoration object and molded.

### Prior Art Documents

### Patent Documents

For example, Patent Document 1 discloses an easily moldable film obtained using polyethylene terephthalate having a high melting point.

For example, Patent Documents 2 and 3 disclose using as a molding material a film that, despite being a biaxially oriented film, has a relatively low melting point through the use of copolyester.

For example, as in Patent Documents 4 and 5, there is a polyester film that selectively reflects wavelengths, in which resin layers having different refractive indices are alternately laminated in multiple layers. This film that selectively reflects a specific wavelength is characterized by having a metallic appearance due to the numbers of layers and the reflected wavelength and also having moldability due to high flexibility.

For example, Patent Documents 6 and 7 disclose as a decorative molding film a molding film comprising a protective layer composed mainly of an acrylic resin.

Patent Document 8 discloses a molding film comprising a protective layer that is composed mainly of a urethane resin and cured only by thermosetting.
Patent Document 1: JP 2001-347565 A
Patent Document 2: JP 2005-97528 A
Patent Document 3: JP 2004-131546 A
Patent Document 4: JP 2005-059332 A
Patent Document 5: JP 2004-249587 A
Patent Document 6: JP 2004-299223 A
Patent Document 7: JP 2003-212938 A
Patent Document 8: JP 2010-260942 A

### Summary of the Invention

### Problems to be Solved by the Invention

Unfortunately, the films disclosed in Patent Documents 1 to 3 cause too great a stress in deformation, and, therefore, are difficult to form into the desired material by thermoforming.

On the other hand, in a decorative molding film used in the film decoration method, the protective layer, a layer covering the surface of a decoration object, is required to have less proneness to damage (scratch resistance) and weather resistance, and plays an important role in decoration of decoration objects. In the film decoration method for a decoration object, when the decoration object is large in size, it is required to be able to decorate the decoration object such that the whole area of the object from top to bottom is covered at a time, and when the decoration object has a complicated shape, it is required that the decorative molding film deform according to the irregular shape and the whole surface conform to the shape. Thus, the protective layer in a decorative molding film is required to have scratch resistance and exhibit conformability to decoration objects as a part of the decorative molding film, and there is an increasing demand for these properties. In addition, high productivity, that is, completion of molding in few steps is also required.

The films disclosed in Patent Documents 4 and 5 have a problem in that when the films are applied to a decorative molded article, the decorative molded article is provided with poor scratch resistance because of low surface hardness of the film.

The films disclosed in Patent Documents 6 and 7 have a problem in that to cure a protective layer, it is necessary to perform a further step of energy ray irradiation using a UV lamp or the like after a decorative molding film is stuck to a decoration object, leading to low productivity.

The film disclosed in Patent Document 8 has a problem in that the scratch resistance required for a protective layer and the conformability to decoration objects cannot be achieved simultaneously.

In view of the above-described background of the prior art, an object of the present invention to provide a decorative molding film having good stretchability suitable for the film decoration method and including a protective layer with good scratch resistance.

### Means for Solving the Problems

To solve the problems described above, the decorative molding film of the present invention has the following structure:
A decorative molding film having a laminated structure in which a protective layer is disposed on at least one surface of a substrate film, wherein the substrate film has a structure in which a layer comprising a resin PA (PA layer) and a layer comprising a resin PB (PB layer) are alternately laminated each by at least 50 layers, each layer having a thickness of 0.03 µm to 0.5 µm, wherein the resin PA and the resin PB have different average in-plane refractive indices, the average in-plane refractive index of the resin PA being relatively higher than the average in-plane refractive index of the resin PB, and the protective layer comprises a polyurethane resin (U) formed from at least an active hydrogen component (A) and an organic isocyanate component (B) and having a polycarbonate skeleton containing an alicyclic hydrocarbon group, and satisfies at least one of Condition (1) and Condition (2).
   Condition (1): the polyurethane resin (U) contains an alkoxysilyl group and/or a silanol group in its molecule.
   Condition (2): the polyurethane resin (U) contains a carboxyl group and/or a salt thereof, and the protective layer further contains a compound (X) containing a glycidyl ether group, and an alkoxysilyl group and/or a silanol group.

To solve the problems described above, the decorative molded article of the present invention has the following structure:
A decorative molded article obtained using the decorative molding film described above.

In the decorative molding film of the present invention, the difference between the average in-plane refractive index of the resin PA constituting the PA layer and the average in-plane refractive index of the resin PB constituting the PB layer is preferably 0.01 or more.

In the decorative molding film of the present invention, the substrate film preferably has an absolute reflectance of 30% or more at any wavelength in a wavelength range of 400 to 800 nm.

In the decorative molding film of the present invention, the difference in glass transition temperature between the resin PA and the resin PB is preferably 20°C or less.

### Effects of the Invention

The decorative molding film of the present invention has excellent conformability to decoration objects and, in addition, includes a protective layer that is cured sufficiently and completely by heat during molding, and thus the decorative molding film of the present invention provides a decorative molded article that is produced at high productivity and has good conformability to decoration objects and good scratch resistance.

### Mode for Carrying Out the Invention

The decorative molding film of the present invention is a decorative molding film having a laminated structure in which a protective layer is disposed on at least one surface of a substrate film, wherein the substrate film has a structure in which a layer comprising a resin PA (PA layer) and a layer comprising a resin PB (PB layer) are alternately laminated each by at least 50 layers, each layer having a thickness of 0.03 µm to 0.5 µm, wherein the resin PA and the resin PB have different average in-plane refractive indices, the average in-plane refractive index of the resin PA being relatively higher than the average in-plane refractive index of the resin PB, and the protective layer comprises a polyurethane resin (U) formed from at least an active hydrogen component (A) and an organic isocyanate component (B) and having a polycarbonate skeleton containing an alicyclic hydrocarbon group, and satisfies at least one of the condition (1) "the polyurethane resin (U) contains an alkoxysilyl group and/or a silanol group in its molecule" and the condition (2) "the protective layer contains a compound (X) containing a glycidyl ether group, and an alkoxysilyl group and/or a silanol group, and the polyurethane resin (U) contains a carboxyl group and/or a salt thereof".

As described in (i) below, the decorative molding film of the present invention, by being laminated on a decoration object with the substrate film facing the surface of the decoration object and stuck to the decoration object by thermoforming, can decorate the decoration object (the decoration object, which is not an element of the decorative molding film of the present invention, is given in parentheses to specify the application aspects of the decorative molding film of the present invention).

### (i) Protective Layer/Substrate Film (/Decoration Object)

Decorating a decoration object using the decorative molding film of the present invention as described above can achieve, for example, solvent-less coating and plating replacement. As a result, the number of steps to form a decorative layer can be reduced as compared to traditional decorations by coating which require multiple steps, and a molded article having a decorative layer can be produced with improved efficiency, leading to cost reduction. In addition, the emission of environmentally unfriendly substances such as volatile organic compounds and CO₂ can be reduced. Furthermore, this decorative molding film, which has a protective layer that satisfies at least one of the condition (1) and the condition (2) above, is produced at high productivity, which is because the protective layer is cured by heat during molding, eliminating the need for separately performing the step of energy ray irradiation, and has good scratch resistance and good conformability to decoration objects. This decorative molding film can provide a decorative molded article with a good appearance.

### Substrate Film

The substrate film in the present invention includes a structure in which a layer comprising a resin PA (PA layer) and a layer comprising a resin PB (PB layer) are alternately laminated each by at least 50 layers, and the resins constituting the PA layer and the PB layer each may be a thermoplastic resin or a thermosetting resin as long as the average in-plane refractive index of the PA layer is relatively higher than the average in-plane refractive index of the PB layer, and may be a homogeneous resin, a copolymer, or a blend of two or more resins. Thermoplastic resins are more preferred in terms of good moldability. The average in-plane refractive index will be described later.

To the resins, various additives such as pigments, dyes, antioxidants, antistatic agents, crystal nucleating agents, inorganic particles, organic particles, viscosity reducing agents, heat stabilizers, lubricants, infrared absorbers, UV absorbers, and doping agents for refractive index adjustment may be added.

Examples of the thermoplastic resins (the resin PA, the resin PB) constituting the PA layer and the PB layer that can be used include polyolefin resins such as polyethylene, polypropylene, polystyrene, and polymethylpentene; alicyclic polyolefin resins; polyamide resins such as nylon 6 and nylon 66; aramid resins; polyester resins such as polyethylene terephthalate, polybutylene terephthalate, polypropylene terephthalate, polybutyl succinate, and polyethylene-2,6-naphthalate; polycarbonate resins; polyarylate resins; polyacetal resins; polyphenylene sulfide resins; fluororesins such as tetrafluoroethylene resin, trifluoroethylene resin, trifluorochloroethylene resin, tetrafluoroethylene-hexafluoropropylene copolymer, and vinylidene fluoride resin; acrylic resins; methacrylate resins; polyacetal resins; polyglycolic acid resins; and polylactic acid resins. Of these, resins having excellent surface hardness are acrylic resins, methacrylate resins, and acetal resins, but from the viewpoint of strength, heat resistance, transparency, and moldability, polyester is particularly preferred.

The polyester that can be preferably used as the resin PA and the resin PB in the present invention refers to a homopolyester or a copolyester which is a polycondensate of a dicarboxylic acid component skeleton and a diol component skeleton. Typical examples of the homopolyester include polyethylene terephthalate, polypropylene terephthalate, polybutylene terephthalate, polyethylene-2,6-naphthalate, poly-1,4-cyclohexanedimethylene terephthalate, and polyethylene diphenylate. In particular, polyethylene terephthalate, which is inexpensive and, therefore, can be used in a wide variety of applications, is preferred.

The copolyester that can be preferably used as the resin PA and the resin PB in the present invention is defined as a polycondensate of at least three components selected from the following components having a dicarboxylic acid skeleton and components having a diol skeleton.

Examples of the components having a dicarboxylic acid skeleton include terephthalic acid, isophthalic acid, phthalic acid, 1,4-naphthalenedicarboxylic acid, 1,5-naphthalenedicarboxylic acid, 2,6-naphthalenedicarboxylic acid, 4,4'-diphenyldicarboxylic acid, 4,4'-diphenylsulfonedicarboxylic acid, adipic acid, sebacic acid, dimer acid, cyclohexanedicarboxylic acid, and ester derivatives thereof. Examples of the components having a glycol skeleton include ethylene glycol, 1,2-propanediol, 1,3-butanediol, 1,4-butanediol, 1,5-pentadiol, diethylene glycol, polyalkylene glycol, 2,2-bis(4'-β-hydroxyethoxyphenyl)propane, isosorbate, 1,4-cyclohexanedimethanol, and spiroglycol.

The substrate film, particularly when used as a decorative molding film, preferably has high elongation. Specifically, the elastic modulus at 150°C is preferably 80 MPa to 380 MPa, and the rupture elongation is preferably 120% to 400%. Such features facilitate molding into the desired shape.

From the viewpoint of such moldability, for any polyester resin preferably used as the resin PA and the resin PB, the glycol residue components preferably consists of 50 to 90 mol% of ethylene glycol residues, 10 to 30 mol% of 1,4-butanediol residues, and 0.1 to 10 mol% of any other glycol residue component. The amount of 1,4-butanediol residues is more preferably 15 to 25 mol%, and the amount of the other glycol residue component is more preferably 1 to 5 mol%.

The glycol residue components may be present in the polyester as a copolymer, but copolymerization may unfavorably decrease the melting point and reduce the heat resistance; therefore, the glycol residue components may be contained in the film as a blend of several polyester resins each having a single glycol residue component, or blending and copolymerization may be used in combination. Preferred examples of the other glycol residue component include, but are not limited to, diethylene glycol residues, 1,4-cyclohexanedimethanol residues, neopentyl glycol residues, and 1,3-propanediol residues. The other glycol residue component may include a plurality of glycol residue components.

Furthermore, from the viewpoint of moldability, in a polyester film constituting the substrate, the dicarboxylic acid residue component constituting the polyester resin constituting the film preferably consists of 95 to 99 mol% of terephthalic acid residues and 1 to 5 mol% of any other dicarboxylic acid residue component. The amount of the other dicarboxylic acid residue component is more preferably 1 to 3 mol%. The dicarboxylic acid residue component may be derived from a dicarboxylic acid or a dicarboxylic acid ester derivative.

The terephthalic acid residues and the other dicarboxylic acid residues may be present in the polyester as a copolymer, but copolymerization causes a decrease in melting point; therefore, from the viewpoint of heat resistance, they are preferably present in separate polyester resins and contained in the film as a blend of the polyester resins. Alternatively, copolymerization and blending may be used in combination. Preferred examples of the other dicarboxylic acid residue components include, but are not limited to, 2,6-naphthalenedicarboxylic acid residues, isophthalic acid residues, 5-sodium sulfoisophthalic acid residues, adipic acid residues, sebacic acid residues, dimer acid residues, and 1,4-cyclohexanedicarboxylic acid residues.

For the PA layer and the PB layer, the average in-plane refractive index of the resin PA constituting the PA layer is relatively higher than the average in-plane refractive index of the resin PB constituting the PB layer, and the difference between the average in-plane refractive index of the resin PA constituting the PA layer and the average in-plane refractive index of the resin PB constituting the PB layer is preferably 0.01 or more, more preferably 0.03 or more, and still more preferably 0.05 or more. The in-plane refractive index as used herein refers to a refractive index in the direction parallel to the substrate film surface, and can be measured using a known refractometer. The average in-plane refractive index refers to an average of in-plane refractive indices measured in the directions of four lines drawn radially from a point in a plane parallel to the film surface at intervals of 45°.

Furthermore, it is more preferred that the difference between the average in-plane refractive index of the resin PA constituting the PA layer and the refractive index in the thickness direction of the resin PA be 0.01 or more, and the difference between the average in-plane refractive index of the resin PB constituting the PB layer and the refractive index in the thickness direction of the resin PB be 0.01 or less, as the reflectance in a reflection range is less likely to decrease even if the angle of incidence is large. The refractive index in the thickness direction as used herein refers to a refractive index in the direction vertical to the substrate film surface, and can be measured in accordance with JIS K 7105 (1981) using a known refractometer.

The PA layer and the PB layer each have a thickness of 0.03 µm to 0.5 µm, preferably 0.05 µm to 0.5 µm, and more preferably 0.1 µm to 0.5 µm. Such a structure gives rise to interference reflection, providing the film with excellent glossiness.

A preferred combination of the resin PA and the resin PB is such that the absolute value of the difference in SP value between the resin PA and the resin PB is 1.0 or less. The SP value as used herein means a solubility parameter determined using the Fedors equation. Larger solubility parameters indicate higher polarities of the resin.

When the absolute value of the difference in SP value is 1.0 or less, delamination between layers is unlikely to occur, which is preferred. The resin PA and the resin PB are preferably resins having the same basic skeleton. The basic skeleton herein refers to a repeating unit constituting the resin, and, for example, when one of the resins is polyethylene terephthalate, its basic skeleton is ethylene terephthalate. As another example, when one of the resins is polyethylene, its basic skeleton is ethylene. When the resin PA and the resin PB are resins having the same basic skeleton, delamination between layers is further unlikely to occur, which is preferred.

A preferred combination of the resin PA and the resin PB is such that the difference in glass transition temperature between the resin PA and the resin PB is 20°C or less, more preferably 10°C or less, and still more preferably 5°C or less. The lower limit is preferably 0°C (no difference in glass transition temperature between the resin PA and the resin PB).

When the difference in glass transition temperature between the resin PA and the resin PB is in the above preferred range, a laminated film is formed with good thickness uniformity, and poor appearance such as color irregularities is less likely to occur. In addition, overstretching is unlikely to occur in forming a decorative molding film. The glass transition temperature as used herein refers to a temperature at the midpoint of a stepped endothermic peak accompanied by a change in specific heat capacity, and can be determined in accordance with JIS K 7122 (1987) by known differential scanning calorimetry (DSC).

More preferably, the resin PA is polyethylene terephthalate or polyethylene naphthalate, and the resin PB is a polyester comprising spiroglycol or cyclohexanedimethanol. The polyester comprising spiroglycol refers to a copolyester obtained by copolymerizing spiroglycol, a homopolyester, or a polyester obtained by blending them. The polyester comprising cyclohexanedimethanol refers to a copolyester obtained by copolymerizing cyclohexanedimethanol, a homopolyester, or a polyester obtained by blending them. The polyester comprising spiroglycol or cyclohexanedimethanol is preferred because the difference in glass transition temperature between the polyester and polyethylene terephthalate or polyethylene naphthalate is small, and, therefore, overstretching is unlikely to occur during molding, and delamination between layers is also unlikely to occur.

When the resin PA is polyethylene terephthalate or polyethylene naphthalate, and the resin PB is a polyester comprising spiroglycol, the resin PB is more preferably a polyester comprising spiroglycol and cyclohexanedicarboxylic acid. The polyester comprising spiroglycol and cyclohexanedicarboxylic acid refers to a polyester obtained by copolymerizing spiroglycol and cyclohexanedicarboxylic acid (or an ester derivative of cyclohexanedicarboxylic acid), a homopolyester, or a polyester obtained by blending them. When the resin PB is a polyester comprising spiroglycol and cyclohexanedicarboxylic acid, the difference in in-plane refractive index between the polyester and polyethylene terephthalate or polyethylene naphthalate is large, making it easy to achieve a high reflectance. In addition, the difference in glass transition temperature between the polyester and polyethylene terephthalate or polyethylene naphthalate is small, and, therefore, overstretching is unlikely to occur during molding, and delamination between layers is also unlikely to occur.

When the resin PA is polyethylene terephthalate or polyethylene naphthalate and the resin PB is a polyester comprising cyclohexanedimethanol, the resin PB is more preferably an ethylene terephthalate polycondensate in which cyclohexanedimethanol is copolymerized in an amount of 15 mol% to 60 mol%. This provides high reflection performance while making the change in optical properties, particularly, by heating or with time small and making delamination between layers unlikely to occur. The ethylene terephthalate polycondensate in which cyclohexanedimethanol is copolymerized in an amount of 15 mol% to 60 mol% adheres to polyethylene terephthalate very strongly. Furthermore, since the cyclohexanedimethanol group has cis and trans geometric isomers and chair and boat conformational isomers, oriented crystallization is unlikely to occur if co-stretching with polyethylene terephthalate is performed, which provides a high reflectance while making the change in optical properties due to thermal history even smaller and making the rupture during film formation unlikely to occur.

Having a structure in which a layer comprising the resin PA (PA layer) and a layer comprising the resin PB (PB layer) are alternately laminated is defined as there exists a portion having a structure in which the PA layer and the PB layer are alternately laminated in the thickness direction. In other words, the arrangement sequence of the PA layer and the PB layer in the thickness direction in the film of the present invention is preferably not random, and from a third layer other than the PA layer and the PB layer, its arrangement sequence is not limited to particular one. In the case of having the PA layer, the PB layer, and a PC layer comprising a resin PC, they are more preferably laminated in a regular arrangement, e.g., A(BCA)ₙ, A(BCBA)ₙ, or A(BABCBA)ₙ, where A represents the PA layer, B represents the PB layer, and C represents the PC layer. Here, n is the number of repeating units, and for example, when n = 3 in A(BCA)ₙ, it represents a lamination in the order of ABCABCABCA in the thickness direction.

The substrate film includes a layer comprising the resin PA (PA layer) and a layer comprising the resin PB (PB layer) alternately each by at least 50 layers, preferably 200 layers or more. The total number of laminations of the PA layer and the PB layer is more preferably 600 layers or more. If the structure in which the PA layer and the PB layer are laminated each by at least 50 layers is not contained, a sufficient reflectance may not be provided, which can result in an appearance with low brightness. When the layer comprising the resin PA (PA layer) and the layer comprising the resin PB (PB layer) are contained alternately each by 200 layers or more, it is easy to achieve an absolute reflectance of 30% or more in a wavelength range of 400 nm to 800 nm. When the total number of laminations of the PA layer and the PB layer is 600 layers or more, it is easy to achieve an absolute reflectance of 60% or more in a wavelength range of 400 nm to 800 nm, and it is easy to provide a metallic appearance with very high brightness. The upper limit of the number of laminations is preferably, but not limited to, up to 1,500 in view of the increase in apparatus size and the reduction in wavelength selectivity caused by a reduction in lamination accuracy due to an excess number of layers.

The substrate film used in the present invention, in which a layer comprising the resin PA (PA layer) and a layer comprising the resin PB (PB layer) are alternately laminated each by at least 50 layers, preferably has an absolute reflectance of 30% or more at any wavelength in a wavelength range of 400 to 800 nm. When the absolute reflectance is 30% or more at any wavelength in a wavelength range of 400 nm to 800 nm, a metallic or half-mirror film with high brightness and high-quality appearance can be provided. More preferably, the absolute reflectance is 30% or more throughout the wavelength range of 400 nm to 1,000 nm. In this case, the film can remain metallic after being molded, and its color does not substantially change depending on the viewing angle. This is because the absolute reflectance is 30% or more at wavelengths longer than those of visible light (700 nm or greater), and the absolute reflectance in the visible light region can be maintained at 30% or more even if the film becomes thinner by stretching so that the reflection range shifts to the shorter wavelength side depending on the viewing angle. More preferably, the absolute reflectance is 40% or more throughout the wavelength range of 400 nm to 1,000 nm. Still more preferably, the absolute reflectance is 60% or more throughout the wavelength range of 400 nm to 1,000 nm. Higher absolute reflectances can provide a metallic film with higher brightness. It is also preferred that the absolute reflectance be 30% or more in a wavelength range of 400 nm to 1,200 nm. In this case, the film, if formed at a higher drawing ratio, is unlikely to take on color and can remain metallic. The absolute reflectance as used herein refers to an absolute reflectance at an angle of incidence of 5°, and can be measured using a known spectrophotometer.

In terms of breaking strength and shape retention, the thickness of the substrate film is preferably 12 µm to 500 µm, more preferably 25 µm to 300 µm, and still more preferably 50 µm to 200 µm.

The thickness of the substrate film can be determined in accordance with JIS C 2151 (2006) using a micrometer. When a protective layer has already been laminated on the substrate film, the thickness can be determined by observing a sample obtained by cutting the laminate cross-sectionally using a microtome under a differential interference microscope, a laser microscope, an electron microscope, or the like. When the border with the protective layer is ill-defined, any known staining technology using RuO₄, OsO₄, or the like may be used to provide a high contrast. The layer structure of the PA layer and the PB layer in the substrate film can be determined through observation using the same method as in the above case where a protective layer is laminated on the substrate film (in this case, "the border with the protective layer" shall be read as "the border with the PA layer or the PB layer").

The substrate film used in the present invention may be subjected to surface treatment such as corona discharge treatment, low-temperature plasma treatment, glow discharge treatment, flame treatment, etching treatment, and roughening treatment, and may have a functional layer formed thereon, such as an easily slippy layer, an antistatic layer, an abrasion-resistant layer, an antireflection layer, a color correction layer, a UV-absorbing layer, a print layer, a transparent conductive layer, a gas-barrier layer, a hologram layer, a release layer, an emboss layer, a sticky layer, or an adhesive layer.

### Protective Layer

The protective layer in the present invention comprises a polyurethane resin (U) formed from at least an active hydrogen component (A) and an organic isocyanate component (B) and having a polycarbonate skeleton containing an alicyclic hydrocarbon group. The presence of the polycarbonate skeleton containing an alicyclic hydrocarbon group in the polyurethane resin (U) increases crystallinity, assists in providing scratch resistance and design properties, and ensures the conformability to decoration objects.

The polyurethane resin (U) is preferably a polyurethane resin formed from an active hydrogen component (A) that contains a polycarbonate polyol (a1) containing an alicyclic hydrocarbon group and an organic isocyanate component (B).

One example of the polycarbonate polyol (a1) containing an alicyclic hydrocarbon group is a polycarbonate polyol produced by condensation through dealcoholization reaction of a C₆-C₂₀ alicyclic polyhydric (dihydric, trihydric, or higher) alcohol or a mixture thereof with one or more than one C₂-C₂₀ acyclic polyhydric (dihydric, trihydric, or higher) alcohol (preferably alkylene diol containing C₆-C₁₀ alkylene, more preferably C₆-C₉ alkylene) and a low-molecular-weight carbonate compound (e.g., dialkyl carbonate containing C₁-C₆ alkyl, alkylene carbonate containing C₂-C₆ alkylene, and diaryl carbonate containing C₆-C₉ aryl). In the following, compound names marked with a symbol, such as "polycarbonate polyol (a1) containing an alicyclic hydrocarbon group", may be represented simply by the symbol alone, such as "(a1)".

Examples of C₆-C₂₀ alicyclic polyhydric (dihydric, trihydric, or higher) alcohols include 1,4-cyclohexanediol, 1,3- or 1,4-cyclohexanedimethanol, hydrogenated bisphenol A, hydrogenated bisphenol F, spiroglycol, and dihydroxymethyltricyclodecane.

Examples of C₂-C₂₀ acyclic polyhydric (dihydric, trihydric, or higher) alcohols include ethylene glycol, 1,2- or 1,3-propylene glycol, diethylene glycol, triethylene glycol, dipropylene glycol, 1,2-, 1,3-, 2,3-, or 1,4-butanediol, 3-methyl-1,2-butanediol, 1,2-, 1,4-, 1,5-, or 2,4-pentanediol, 2- or 3-methyl-1,5-pentanediol, 2-or 3-methyl-4,5-pentanediol, 2,3-dimethyltrimethylene glycol, 2,2,4-trimethyl-1,3-pentanediol, 1,4-, 1,5-, 1,6-, or 2,5-hexanediol, 1,7-heptanediol, 2- or 3-methyl-1,6-hexanediol, 2-, 3-, or 4-methyl-1,7-heptanediol, 1,8-octanediol, 2-, 3-, or 4-methyl-1,8-octanediol, 1,9-nonanediol, 1,12-dodecanediol, neopentyl glycol, glycerin, trimethylolethane, trimethylolpropane, C₆-C₁₂ trialkanolamine, 1,2,6-hexanetriol, pentaerythritol, diglycerin, triglycerin, dipentaerythritol, sorbitol, and mannitol.

The range of the number average molecular weight (hereinafter abbreviated as Mn) of the polycarbonate polyol (a1) containing an alicyclic hydrocarbon group, from the viewpoint of flexibility of the resulting protective layer, is preferably 500 to 5,000, more preferably 750 to 3,000, and still more preferably 1,000 to 2,000. The Mn can be determined by gel permeation chromatography using tetrahydrofuran as a solvent and polystyrene as a standard sample.

In the polyurethane resin (U), the amount of the skeleton derived from the polycarbonate polyol (a1) containing an alicyclic hydrocarbon group is preferably such that, from the viewpoint of scratch resistance and design properties of the protective layer, the mass of cyclic hydrocarbon groups contained in (a1) based on the total mass of the active hydrogen component (A) and the organic isocyanate component (B) is 1 to 30% by mass, more preferably 5 to 20% by mass, and particularly preferably 10 to 15% by mass.

As an active hydrogen component (A) other than the polycarbonate polyol (a1) containing an alicyclic hydrocarbon group, those which have been traditionally used to produce polyurethane can be used. For example, a polymeric polyol (a2) having a Mn of 500 to 5,000 other than (a1), a carboxyl group-containing polyol and its salt (a3), a chain extender (a4), and a reaction terminator (a5) can be used.

As the polymeric polyol (a2) having a Mn of 500 to 5,000 other than (a1), a polymeric polyol which has been traditionally used to produce polyurethane can be used, but from the viewpoint of weather resistance and water resistance of the resulting protective layer, preferred is aliphatic polycarbonate polyol (a21). One example of (a21) is a polycarbonate polyol produced by condensation through dealcoholization reaction of a C₄-C₁₀ linear diol (e.g., 1,4-butanediol, 1,6-hexanediol, and 1,9-nonanediol), a C₄-C₁₀ branched diol (e.g., 2-methyl butanediol, 2-ethyl butanediol, neopentyl glycol, 2-methyl pentanediol, and 3-methyl pentanediol), or a mixture of two or more of them and a low-molecular-weight carbonate compound (e.g., dialkyl carbonate containing C₁-C₆ alkyl, alkylene carbonate containing C₂-C₆ alkylene, and diaryl carbonate containing C₆-C₉ aryl).

As the carboxyl group-containing polyol and its salt (a3), those which exhibit high dispersion stability when the polyurethane resin (U) is used in the form of a water dispersion are particularly preferably used. Examples of (a3) include C₆-C₂₄ dialkylolalkanoic acids [e.g., 2,2-dimethylolpropionic acid (hereinafter abbreviated as DMPA), 2,2-dimethylolbutanoic acid, 2,2-dimethylolheptanoic acid, and 2,2-dimethyloloctanoic acid] and these salts. Examples of these salts include ammonium salts and amine salts [e.g., C₁-C₁₂ primary amine (primary monoamine such as methylamine, ethylamine, propylamine, and octylamine) salts, secondary monoamine (dimethylamine, diethylamine, and dibutylamine) salts, and tertiary monoamine (aliphatic tertiary monoamines such as trimethylamine, triethylamine, triethanolamine, *N*-methyldiethanolamine, and *N,N-*dimethylethanolamine) salts], and these can be used in combination of two or more.

Of the above salts, preferred from the viewpoint of water resistance of the resulting protective layer and stability of a water dispersion of urethane resin are salts such that the basic compound constituting the salts has a boiling point at normal pressure of -40°C to 150°C, specifically, for example, ammonium salts, triethylamine salts, and *N,N-*dimethylethanolamine salt.

In the polyurethane resin (U), the amount of the skeleton derived from the carboxyl group-containing polyol and its salt (a3) is preferably such that, from the viewpoint of dispersion stability and water resistance of the resulting protective layer, the mass of carboxyl groups contained in (a3) based on the total mass of the active hydrogen component (A) and the organic isocyanate component (B) is 0.01 to 1.5% by mass, more preferably 0.05 to 0.75% by mass, and still more preferably 0.08 to 0.50% by mass.

The amount of carboxyl groups in the polyurethane resin (U) formed can be calculated from an acid value determined as follows: 3 to 10 g of the polyurethane resin (U) is dried by heating at 130°C for 45 minutes; the resulting residue is washed with water, and then dried by heating at 130°C for 45 minutes again; the residue is dissolved in dimethylformamide; and the acid value is measured by the method described in JIS K 0070 (1992) (potentiometric titration).

Examples of the chain extender (a4) include C₂-C₂₀ acyclic polyhydric (dihydric, trihydric, or higher) alcohols, ethylene oxide and/or propylene oxide low mol adducts (having a chemical formula weight or Mn of less than 500) of these acyclic polyhydric alcohols, C₂-C₁₀ diamines (e.g., ethylenediamine, propylenediamine, hexamethylenediamine, isophoronediamine, and toluenediamine), poly (n = 2 to 6) alkylene (C₂-C₆) poly (n = 3 to 7) amines (e.g., diethylenetriamine and triethylenetetramine), and hydrazine and derivatives thereof (e.g., dibasic acid dihydrazide such as adipic acid dihydrazide).

Examples of the reaction terminator (a5) include C₁-C₈ monoalcohols (e.g., methanol, ethanol, isopropanol, butanol, Cellosolves, and Carbitols) and C₁-C₁₀ monoamines (e.g., monomethylamine, monoethylamine, monobutylamine, dibutylamine, monooctylamine, monoethanolamine, and diethanolamine).

The components (a1) to (a5) of the active hydrogen component (A) may be used alone or in combination of two or more.

As the organic isocyanate component (B), those which have been traditionally used to produce polyurethane can be used, and, for example, a C₆-C₁₇ alicyclic polyisocyanate (B1), a C₄-C₂₁ aliphatic polyisocyanate (B2), a C₈-C₂₅ aromatic polyisocyanate (B3), a C₁₀-C₁₇ araliphatic polyisocyanate (B4), and a modified compound (B5) of these polyisocyanates are used. As the organic isocyanate component (B), one of them may be used alone, or two or more of them may be used in combination.

Examples of the C₆-C₁₇ alicyclic polyisocyanate (B1) include isophorone diisocyanate (hereinafter abbreviated as IPDI), 4,4-dicyclohexylmethane diisocyanate (hereinafter abbreviated as hydrogenated MDI), cyclohexylene diisocyanate, methylcyclohexylene diisocyanate, bis(2-isocyanatoethyl)-4-cyclohexene-1,2-dicarboxylate, and 2,5- or 2,6-norbornane diisocyanate.

Examples of the C₄-C₂₁ aliphatic polyisocyanate (B2) include ethylene diisocyanate, tetramethylene diisocyanate, hexamethylene diisocyanate, dodecamethylene diisocyanate, 1,6,11-undecane triisocyanate, 2,2,4-trimethylhexamethylene diisocyanate, lysine diisocyanate, 2,6-diisocyanatomethyl caproate, bis(2-isocyanatoethyl) fumarate, bis(2-isocyanatoethyl) carbonate, and 2-isocyanatoethyl-2,6-diisocyanatohexanoate.

Examples of the C₈-C₂₅ aromatic polyisocyanate (B3) include 1,3- or 1,4-phenylene diisocyanate, 2,4- or 2,6-tolylene diisocyanate (hereinafter abbreviated to TDI), crude TDI, 4,4'- or 2,4'-diphenylmethane diisocyanate (hereinafter abbreviated as MDI), crude MDI, polyaryl polyisocyanate, 4,4'-diisocyanatobiphenyl, 3,3'-dimethyl-4,4'-diisocyanatobiphenyl, 3,3'-dimethyl-4,4'-diisocyanatodiphenylmethane, 1,5-naphthylene diisocyanate, 4,4',4"-triphenylmethane triisocyanate, and m- or *p*-isocyanatophenylsulfonyl isocyanate.

Examples of the C₁₀-C₁₇ araliphatic polyisocyanate (B4) include *m-* or *p-*xylylene diisocyanate and α,α,α',α'-tetramethylxylylene diisocyanate.

Examples of the modified compound (B5) of the polyisocyanates (B1) to (B4) include modified compounds of polyisocyanate (e.g., a modified compound containing a urethane, carbodiimide, allophanate, urea, biuret, urethdione, urethimine, isocyanurate, or oxazolidone group; the amount of free isocyanate groups being typically 8 to 33% by mass, preferably 10 to 30% by mass, and particularly preferably 12 to 29% by mass), specifically, modified compounds of polyisocyanate such as modified MDI (e.g., urethane-modified MDI, carbodiimide-modified MDI, and trihydrocarbyl phosphate-modified MDI), urethane-modified TDI, biuret-modified HDI, isocyanurate-modified HDI, and isocyanurate-modified IPDI.

Of these organic isocyanate components (B), preferred from the viewpoint of weather resistance of the resulting protective layer are (B1) and (B2), and more preferred are IPDI and hydrogenated MDI.

The polyurethane resin (U) is preferably one which can be used as a solvent solution or a water dispersion from the viewpoint of coating properties in forming a decorative molding film, and more preferably one which can be used as a water dispersion from the viewpoint of environmental protection through a reduction in volatile organic compounds (VOC). The solvent solution or the water dispersion of the polyurethane resin (U) can be prepared by any known method.

Examples of the method of preparing a solvent solution include reacting materials in a solvent and dissolving the polyurethane resin (U) allowed to react under solventless conditions in a solvent. The solvent used may be a known organic solvent, and from the viewpoint of solubility of the polyurethane resin (U) and drying properties in producing a protective layer, it is preferable to use a polar solvent having a boiling point of not higher than 100°C, such as acetone, dimethyl ketone, methyl isobutyl ketone, tetrahydrofuran, or isopropyl alcohol.

Examples of the method of preparing a water dispersion include the prepolymer mixing process described, for example, in JP 2004-2732 A, and the method described in JP 2009-96998 A involving forming a urethane resin dead polymer (polyurethane resin containing almost no isocyanate group), and then dispersing the dead polymer in water.

Examples of the method of forming a protective layer using the polyurethane resin (U) include the following method.

A solvent solution of the polyurethane resin (U) or a water dispersion of the polyurethane resin (U) (such a water dispersion may be referred to as "coating") is applied thinly and uniformly to a molding film using a known coating method (e.g., bar coating, roll coating, gravure coating, curtain coating, spray coating, and silk-screen printing) and placed, for example, in a hot-air oven to undergo reaction, whereby a polycarbonate-based polyurethane layer can be formed.

The protective layer composed of the polycarbonate-based polyurethane resin thus formed may further contain any resin other than the above reactant, for example, acrylic-based polyurethane, polyether-based polyurethane, and polyester-based polyurethane.

To improve the water resistance and the scratch resistance of the resulting protective layer without compromising conformability to decoration objects, it is further preferable to satisfy at least one of Condition (1) and Condition (2) below.
Condition (1): the polyurethane resin (U) contains an alkoxysilyl group and/or a silanol group in its molecule.
Condition (2): the protective layer contains a compound (X) containing a glycidyl ether group, and an alkoxysilyl group and/or a silanol group, and the polyurethane resin (U) contains a carboxyl group and/or a salt thereof.

Examples of the method of producing the polyurethane resin (U) having an alkoxysilyl group and/or a silanol group in its molecule defined in the condition (1) include (1-1) reacting a urethane resin containing an amino group or a carboxyl group with a compound (X) containing a glycidyl ether group, and an alkoxysilyl group and/or a silanol group in its molecule, and (1-2) reacting a urethane resin containing an isocyanate group with a compound (Y) containing an amino group, and an alkoxysilyl group and/or a silanol group in its molecule.

Examples of the compound (X) used in the method (1-1) include C₄-C₁₁ glydoxyalkyltrialkoxysilane, C₄-C₁₃ glydoxyalkyl (alkyl) dialkoxysilane, C₄-C₁₅ glydoxyalkyl (dialkyl) alkoxysilane, and hydrolysates thereof (derivatives thereof in which the alkoxy group is converted into a hydroxyl group), specifically, 3-glycidoxypropyltrimethoxysilane, 3-glycidoxypropyltriethoxysilane, 3-glycidoxypropylmethyldimethoxysilane, 3-glycidoxypropylmethyldiethoxysilane, and hydrolysates thereof (derivatives thereof in which the alkoxy group is converted into a hydroxyl group). These compounds (X) may be used alone or in combination of two or more.

Examples of the method of producing the urethane resin containing a carboxyl group used in the method (1-1) include a method in which the carboxyl group-containing polyol and its salt (a3) is used as the active hydrogen component (A) in forming the urethane resin. Examples of the method of producing the urethane resin containing an amino group used in the method (1-1) include a method in which an amino group is introduced into a terminal using a polyfunctional amine such as C₂-C₁₀ diamine and poly (n = 2 to 6) alkylene (C₂-C₆) poly (n = 3 to 7) amine, as exemplified as the chain extender (a4) in the description of the production of a urethane resin, and a method in which in the reaction between the active hydrogen component (A) and the organic isocyanate component (B), an isocyanate group is introduced into a terminal using isocyanate groups in molar excess relative to active hydrogen (e.g., hydroxyl group and amino group) that reacts with the isocyanate groups, and then reacted with water to convert into a terminal amino group.

Temperature, time, and other conditions for the reaction between a glycidyl ether group and a carboxyl group or an amino group may be the same conditions as typically used for the reaction of these groups.

Examples of the compound (Y) used in the method (1-2) include C₄-C₁₁ aminoalkyltrialkoxysilane, C₄-C₁₃ aminoalkyl (alkyl) dialkoxysilane, C₄-C₁₅ aminoalkyl (dialkyl) alkoxysilane, and hydrolysates thereof (derivatives thereof in which the alkoxy group is converted into a hydroxyl group), specifically, 3-aminopropyltriethoxysilane, 3-aminopropyltrimethoxysilane, *N*-2-(aminoethyl)-3-aminopropyltriethoxysilane, *N*-2-(aminoethyl)-3-aminopropyltrimethoxysilane, *N-*2-(aminoethyl)-3-aminopropylmethyldimethoxysilane, and hydrolysates thereof (derivatives thereof in which the alkoxy group is converted into a hydroxyl group). These compounds (Y) may be used alone or in combination of two or more.

Examples of the method of introducing a isocyanate group used in the method (1-2) include a method in which in the reaction between the active hydrogen component (A) and the organic isocyanate component (B), an isocyanate group is introduced into a terminal using isocyanate groups in molar excess relative to active hydrogen (e.g., hydroxyl group and amino group) that reacts with the isocyanate groups.

Temperature, time, and other conditions for the reaction between a glycidyl ether group and a carboxyl group or an amino group may be the same conditions as typically used for the reaction of these groups.

When the polyurethane resin (U) contains an alkoxysilyl group and/or a silanol group in its molecule, the alkoxysilyl group and/or the silanol group are cross-linked by heating during decorative molding to form a cross-linked structure, providing a protective layer excellent in water resistance and scratch resistance.

As the compound (X) containing a glycidyl ether group, and an alkoxysilyl group and/or a silanol group defined in Condition (2), the compound (X) used in the method (1-1) can be used. As the method of producing the polyurethane resin (U) containing a carboxyl group, the method of producing a urethane resin containing a carboxyl group used in the method (1-1) can be used.

Examples of the method of making the protective layer contain the compound (X) to satisfy Condition (2) include preliminarily mixing the polyurethane resin (U) containing a carboxyl group with the compound (X), and mixing the polyurethane resin (U) with the compound (X) during formation of a decorative molding film.

Temperature, time, and other conditions for the reaction between a glycidyl ether group and a carboxyl group may be the same conditions as typically used for the reaction of these groups.

When the protective layer contains the compound (X), the glycidyl ether group contained in the compound (X) reacts with the carboxyl group contained in the polyurethane resin (U), and furthermore, the alkoxysilyl group and/or the silanol group contained in the compound (X) are cross-linked by heating during decorative molding to form a cross-linked structure, providing a protective layer excellent in water resistance and scratch resistance.

The amount of (X) and/or (Y) is preferably such that, from the viewpoint of the water resistance and the scratch resistance of the resulting protective layer, the total mass of Si atoms derived from the alkoxysilyl group and/or the silanol group contained in (X) and/or (Y) based on 100 parts by mass of the total amount of (A) and (B) is 0.05 to 2.0 parts by mass, more preferably 0.1 to 1.5 parts by mass, and particularly preferably 0.2 to 1.0 parts by mass.

The protective layer may optionally contain additives such as curing accelerators, binding agents, surface adjustors, pigments, dyes, plasticizers, UV absorbers, and light stabilizers. The total amount of the additives and resins other than the polycarbonate-based polyurethane resin in the protective layer is preferably 10 parts by mass or less, more preferably 5 parts by mass or less, based on 100 parts by mass of the total mass of the polyurethane resin. If the resins other than the reactant is contained in an amount greater than this range, the protective layer may not be provided with its original properties.

The thickness of the protective layer is preferably 10 to 70 µm, more preferably 20 to 50 µm. The thickness of 10 µm or more is preferred because it makes it easy to provide coating properties. The thickness of 70 µm or less is preferred because it provides a moderate thickness and a flat surface, making it easy to retain high surface quality. If during the production process of a decorative molding film, the thickness of the protective layer can be measured in accordance with JIS C 2151 (2006) using a micrometer when layers are formed. Even in the state of being already laminated to a decoration object, the thickness of the protective layer can be measured by observing a cross-section under a differential interference microscope, a laser microscope, an electron microscope, or the like.

### Method of Fabricating Decorative Molded Article

The method of fabricating a decorative molded article using the decorative molding film of the present invention may be any thermoforming method as long as it can decorate a decoration object of three-dimensional shape, and commonly known molding methods, for example, vacuum molding, vacuum-pressure molding, blow molding, press molding, insert injection molding, in-mold molding, and extrusion molding can be used.

### Examples

The present invention will now be described with reference to examples, but these examples are not intended to limit the present invention. Methods of evaluating the decorative molding films produced in Examples and Comparative Examples will be described below.

### Conformability to Decoration Object

Using a vacuum molding machine "FORMECH 300X" (manufactured by Seikosangyo Co., Ltd.), a decorative molding film was vacuum molded using a cylindrical mold (bottom diameter: 50 mm) by heating with a far-infrared heater for 1 minute to a film surface temperature of 170°C to thereby form a film. The condition where the film was molded following the mold was evaluated according to the degree of molding (drawing ratio: molding height/bottom diameter) using the following criteria.
Grade A: The film was molded at a drawing ratio of 1.0 or greater.
Grade B: The film was molded at a drawing ratio of 0.6 or greater and less than 1.0, but not molded at 1.0 or greater.
Grade C: The film was molded at a drawing ratio of 0.3 or greater and less than 0.6, but not molded at 0.6 or greater.
Grade D: The film was molded only at a drawing ratio of less than 0.3 (curve molding), and not molded at 0.3 or greater.
Grade E: The film was ruptured and cracked only by a slight folding.

The evaluation was made five times for each sample. Samples evaluated to be Grade E not once were judged as having satisfactory conformability, and samples evaluated to be Grade E at least once as having unsatisfactory conformability.

### Scratch Resistance

The protective layer-side surface of a decorative molded article obtained by sticking a decorative molding film to a decoration object was evaluated for scratch resistance using a scratch resistance tester (manufactured by HEIDON). The type of the test needle used was 0.1 mm R (made of sapphire), and the scratching speed was 300 mm/min. The load in the measurement was 200 g. After the test, the condition of the scratch was observed and evaluated as follows: not defective: a scratch was left, but the protective layer was not cut away; partially defective: the protective layer alone was cut away; defective: the decorative molding film was cut away to expose the decoration object. The measurements were made five times for each sample. In the five measurements, samples evaluated to be defective not more than once were judged as having satisfactory scratch resistance, and samples evaluated to be defective more than once as having unsatisfactory scratch resistance.

### Elongation and Elastic Modulus at 150°C

A decorative molding film was cut into a rectangle 150 mm long × 10 mm wide to prepare a sample. Using a tensile tester (Tensilon UCT-100 manufactured by Orientec Co., Ltd.), a tensile test was performed at an initial tensile chuck distance of 50 mm and a tensile speed of 300 mm/min. In the measurement, the sample was placed in a constant-temperature zone preset at a temperature of 150°C, preheated for 60 seconds, and then subjected to the tensile test. The rupture elongation and the elastic modulus were determined from the load-strain curve obtained. The measurements were made five times for each sample, and an evaluation was made based on the average value of three values excluding the maximum value and the minimum value calculated.

### Intrinsic Viscosity

The intrinsic viscosities of a polyester resin and a film were measured at 25°C using an Ostwald viscometer by dissolving polyester in o-chlorophenol.

### Layer Thickness

For a sample obtained by cutting a film cross-sectionally using a microtome, the cross-section was observed at a magnification of 40,000X using a transmission electron microscope model H-7100FA (manufactured by Hitachi Ltd.) at an acceleration voltage of 75 kV, and a cross-sectional image was micrographed.

The image obtained was then captured using CanonScan D123U at an image size of 720 dpi. The image was saved in JPEG format, and then this JPG file was opened and analyzed using image processing software Image-Pro Plus ver.4 (available from Planetron. Inc.). In the image analysis, the relationship between a position in the thickness direction and an average brightness in a region bounded by two lines in the width direction was read as a numerical data in a vertical thick profile mode. Using spreadsheet software (Excel 2000), a data of the position (nm) and brightness was subjected to numerical processing involving six sampling steps (six thinnings) and three-point moving average. Furthermore, the data obtained where brightness oscillates periodically was differentiated, and the maximum value and the minimum value of the differentiation curve were read. The interval between these adjacent values was calculated as a layer thickness of one layer. This procedure was implemented for randomly selected 10 images, and the average of the calculated values was used as the layer thickness. In the examples, the sample was stained using known RuO₄ to provide a high contrast.

### Average In-Plane Refractive Index

Using an Abbe refractometer "NAR-4T" manufactured by Atago Co., Ltd., the in-plane refractive indices of films produced from the PA layer alone and the PB layer alone were each measured in such a manner that a polarizing plate was attached to an eyepiece, and the position of the polarizing plate and the position of the film were each adjusted. The average in-plane refractive index was determined by averaging in-plane refractive indices measured in the directions parallel to four lines drawn radially from a point in a plane parallel to the film surface at intervals of 45°.

### Absolute Reflectance

To a spectrophotometer UV-3150 manufactured by Shimadzu Corporation, an absolute reflectance measuring apparatus ASR-3105 at an angle of incidence of 5° was mounted, and the absolute reflectance in the range of 400 to 1,200 nm was measured in accordance with the included instruction manual under the following conditions.

- Scan speed: high
- Sampling pitch: 1 nm
- Measurement Mode: single
- Slit width: 30 nm
- Light source switching wavelength: 360 nm
- Detector switching wavelength: 805 nm
- S/R switching: standard
- Detector lock: automatic
- Slit program: standard

### Glass Transition Temperature

The glass transition temperature was measured and calculated in accordance with JIS K 7122 (1987) using differential scanning calorimetry (DSC). First, in 1st Run, the temperature was raised from 25°C to 290°C at 20°C/min, held at 290°C for 5 minutes, and then rapidly cooled to 25°C. In the following 2nd Run, the temperature was raised from 25°C to 290°C at 20°C/min. As the glass transition temperature of a resin, the glass transition temperature in 2nd Run was used.

- Apparatus: Robot DSC-RDC220 manufactured by Seiko Instruments and Electronics Co. Ltd.
- Data analysis: Disk session SSC/5200
- Sample mass: 5 mg

Production examples of polyurethane resins used in Examples and Comparative Examples will be described below.

### Production Example 1

### Production Example of Polyurethane Resin (U1)

Into a simple pressure reactor equipped with a stirrer and a heater, 165.5 parts by mass of a polycarbonate diol with a Mn of 1,000 resulting from the reaction between 1,4-cyclohexanedimethanol and ethylene carbonate, 66.2 parts by mass of a polycarbonate diol with a Mn of 2,000 resulting from the reaction between a mixture of 1,4-butanediol and 1,6-hexanediol (molar ratio: 70:30) and ethylene carbonate, 0.26 part by mass of ethylene glycol, 21.3 parts by mass of DMPA, 104.4 parts by mass of IPDI, and 153.3 parts by mass of acetone were loaded and stirred at 85°C for 15 hours to cause a urethanization reaction, providing an acetone solution of a urethane prepolymer containing an isocyanate group at its terminal. The resulting acetone solution of the urethane prepolymer in an amount of 511 parts by mass was loaded into the simple pressure reactor, and 12.9 parts by mass of triethylamine (neutralizer) and 623.9 parts by mass of water were added thereto with stirring at 40°C. After stirring at 60 rpm for 3 minutes, 1.5 parts by mass of 3-aminopropyltrimethoxysilane and 3.6 parts by mass of ethylenediamine (chain extender) were added, and acetone was distilled off under reduced pressure at 65°C over 8 hours to give 1,000 parts by mass of a water dispersion of a polyurethane resin (U1) having a silanol group in its molecule.

### Production Example 2

### Production Example of Polyurethane Resin (U2)

In a nitrogen atmosphere, 13.1 parts by mass of a polycarbonate diol with a Mn of 900 resulting from the reaction between a mixture of 1,4-cyclohexanedimethanol and 1,6-hexanediol (molar ratio: 50:50) and ethylene carbonate, 116.8 parts by mass of a polycarbonate diol with a Mn of 1,000 resulting from the reaction between a mixture of 1,4-butanediol and 1,6-hexanediol (molar ratio: 70:30) and ethylene carbonate, 5.1 parts by mass of ethylene glycol, 34.4 parts by mass of DMPA, and 119.6 parts by mass of hydrogenated MDI were loaded into KRC Kneader (manufactured by Kurimoto Ltd.), a twin-screw kneader, and kneaded at 220°C for 10 minutes to cause a urethanization reaction. The reactant was taken out, rolled with a pressing machine heated to 180°C, and then chopped with an angular pelletizer (manufactured by Horai Co., Ltd.) to provide a polyurethane resin. Subsequently, 289.1 parts of the polyurethane resin obtained, 14 parts by mass of 25% by mass aqueous ammonia, and 660.4 parts by mass of water were loaded into a temperature-controllable pressure container, and dispersed at 150°C and 12,000 rpm for 3 minutes using a dispersion and emulsification machine "Clearmix" (registered trademark, manufactured by M Technique Co. Ltd.) to give a polyurethane resin water dispersion. Subsequently, to 963.5 parts by mass of the polyurethane resin water dispersion obtained, 36.5 parts by mass of 3-glycidoxypropyltrimethoxysilane was added at 30°C and homogeneously stirred to give 1,000 parts by mass of a water dispersion containing 3-glycidoxypropyltrimethoxysilane and a polyurethane resin (U2) containing a salt of a carboxyl group in its molecule.

### Production Example 3

### Production Example of Polyurethane Resin (U3)

Into a simple pressure reactor equipped with a stirrer and a heater, 184.7 parts by mass of a polycarbonate diol with a Mn of 900 resulting from the reaction between a mixture of 1,4-cyclohexanedimethanol and 1,6-hexanediol (molar ratio: 50:50) and ethylene carbonate, 68.4 parts by mass of a polycarbonate diol with a Mn of 2,000 resulting from the reaction between 1,6-hexanediol and ethylene carbonate, 26.9 parts by mass of 1,6-hexanediol, 29 parts by mass of DMPA, 178.2 parts by mass of hydrogenated MDI, and 487.3 parts by mass of methyl ethyl ketone were loaded and stirred at 90°C for 24 hours to cause a urethanization reaction, providing a methyl ethyl ketone solution of polyurethane resin. To 974.5 parts by mass of the resulting methyl ethyl ketone solution of polyurethane resin, 25.5 parts by mass of 3-glycidoxypropyltrimethoxysilane was added at 30°C and homogeneously stirred to give 1,000 parts by mass of a methyl ethyl ketone solution containing 3-glycidoxypropyltrimethoxysilane and a polyurethane resin (U3) containing a salt of a carboxyl group in its molecule.

### Comparative Production Example 1

### Production Example of Polyurethane Resin (U'1)

Into a simple pressure reactor equipped with a stirrer and a heater, 239 parts by mass of a polycarbonate diol with a Mn of 2,000 resulting from the reaction between 1,6-hexanediol and ethylene carbonate, 41 parts by mass of 1,6-hexanediol, 29 parts by mass of DMPA, 178.2 parts by mass of hydrogenated MDI, and 487.3 parts by mass of methyl ethyl ketone were loaded and stirred at 90°C for 24 hours to cause a urethanization reaction, providing a methyl ethyl ketone solution of polyurethane resin. To 974.5 parts by mass of the resulting methyl ethyl ketone solution of polyurethane resin, 25.5 parts by mass of 3-glycidoxypropyltrimethoxysilane was added at 30°C and homogeneously stirred to give 1,000 parts by mass of a methyl ethyl ketone solution of a polyurethane resin (U'1).

### Comparative Production Example 2

### Production Example of Polyurethane Resin (U'2)

Into a simple pressure reactor equipped with a stirrer and a heater, 189.6 parts by mass of a polycarbonate diol with a Mn of 900 resulting from the reaction between a mixture of 1,4-cyclohexanedimethanol and 1,6-hexanediol (molar ratio: 50:50) and ethylene carbonate, 70.2 parts by mass of a polycarbonate diol with a Mn of 2,000 resulting from the reaction between 1,6-hexanediol and ethylene carbonate, 27.6 parts by mass of 1,6-hexanediol, 29.8 parts by mass of DMPA, 182.9 parts by mass of hydrogenated MDI, and 500 parts by mass of methyl ethyl ketone were loaded and stirred at 90°C for 24 hours to cause a urethanization reaction, providing 1,000 parts by mass of a methyl ethyl ketone solution of a polyurethane resin (U'2).

### Example 1

A polyethylene terephthalate (hereinafter referred to as PET) having an intrinsic viscosity of 0.65 was used as the resin PA. Easter PET G6763 (available from Eastman Chemical Company) (hereinafter referred to as PET G) was used as the resin PB. The polyester resins PA and PB were separately dried, brought into a molten state at 280°C in an extruder, passed through a gear pump and a filter, and then joined at a feed block of 801 layers at a discharging ratio of 1.1/1 such that they were alternately laminated, after which the laminate was discharged through a T-die onto a cooling drum controlled at 25°C into the form of a sheet. At this time, an electrostatic application was conducted using a wire electrode with a diameter of 0.1 mm to bring the sheet into close contact with the cooling drum to thereby obtain an unstretched film. Subsequently, the temperature of the film was elevated with a heating roll before longitudinal stretching, and finally, the film was stretched 3.2 times in the longitudinal direction at 96°C, and immediately cooled with a metal roll controlled at 40°C. This uniaxially stretched film was corona discharge treated in the air on both surfaces to adjust the wetting tension of a substrate film to be 55 mN/m, and to the treated surfaces, a mixture of the following coatings A, B, C, and D mixed such that no aggregation occurred was uniformly applied using a #4 bar coater to form an adhesion-improving layer.

### Adhesion-Improving Layer

A: Aqueously dispersed acrylic resin (acid radical: 2.8 mg/g)
B: Methylolated melamine (diluent: isopropyl alcohol/water)
C: Colloidal silica (average particle size: 80 nm)
D: Fluorochemical surfactant (diluent: water)

Solid content mass ratio: A/B/C/D = 100 parts by mass/25 parts by mass/3 parts by mass/0.2 part by mass

The film was then stretched 3.2 times in the width direction using a tenter-type transverse stretching machine at a preheating temperature of 85°C and a stretching temperature of 95°C, and, continuously in the tenter, heat treated at a temperature of 230°C for 2 seconds while being relaxed in the width direction by 4% to provide a biaxially oriented film with a thickness of 100 µm. This biaxially oriented film was used as a substrate film.

The thickness of the PA layer of the substrate film calculated as described in "Layer Thickness" was 0.125 µm; the thickness of the PB layer was 0.125 µm; the average in-plane refractive index of the layer comprising the resin PA (PA layer) was 1.60; the average in-plane refractive index of the layer comprising the resin PB (PB layer) was 1.57; the minimum absolute reflectance of the substrate film at a wavelength in a wavelength range of 400 to 800 nm was 88%; the glass transition temperature of the resin PA was 80°C; and the glass transition temperature of the resin PB was 81°C.

Thereafter, the water dispersion of the polyurethane resin (U1) obtained in Production Example 1 was applied to one surface of a molding film by the applicator method such that the thickness after drying would be 40 µm, and then dried at 100°C for 10 minutes to form a protective layer, thereby providing a decorative molding film. Using the decorative molding film obtained, vacuum molding was performed at a temperature of 170°C to provide a decorative molded article. The results of the vacuum molding at this time and physical properties are shown in Table 1.

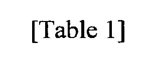

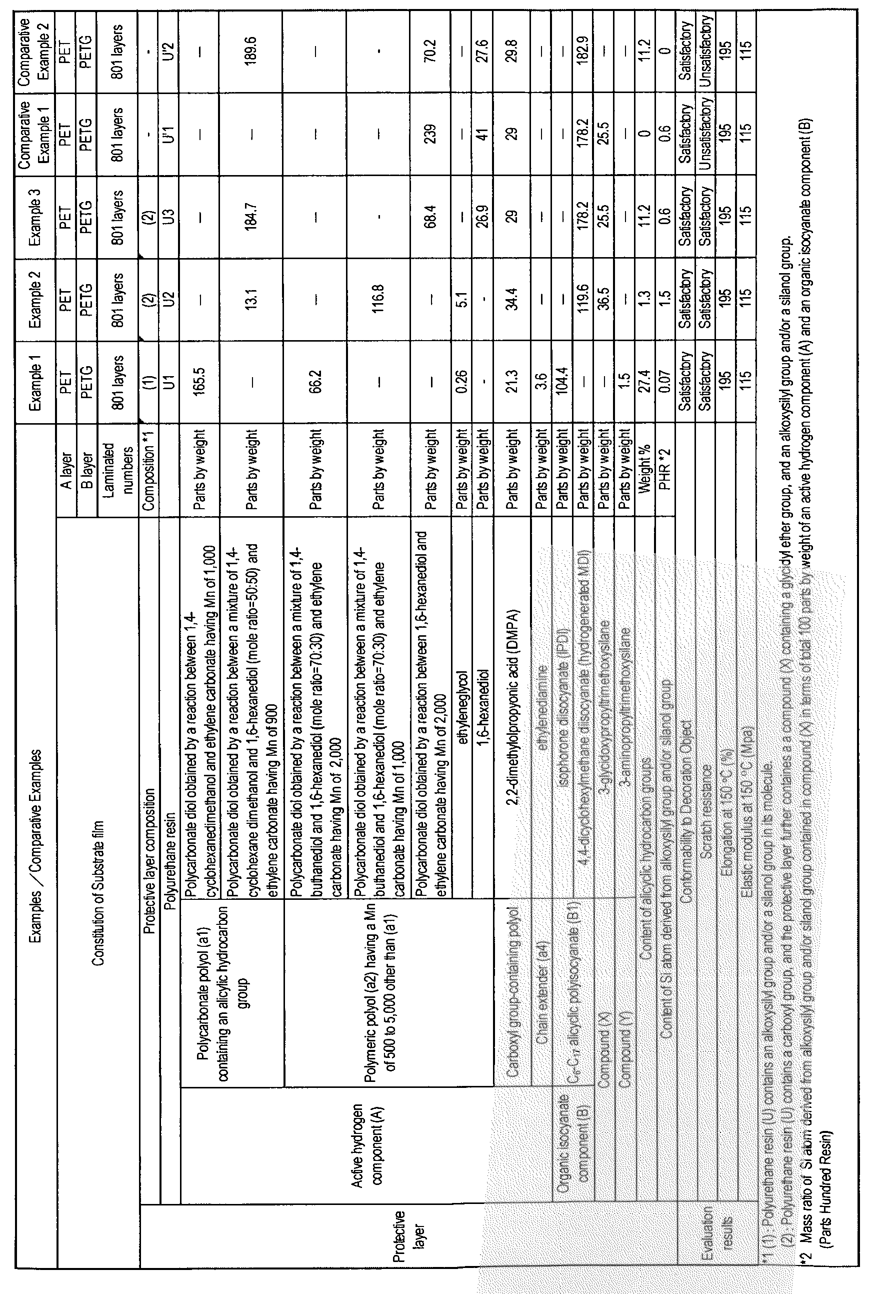

### Example 2

The conditions were the same as in Example 1 except that the water dispersion of the polyurethane resin (U1) obtained in Production Example 1 was substituted with the water dispersion of the polyurethane resin (U2) obtained in Production Example 2. The results are also shown in Table 1.

### Example 3

The conditions were the same as in Example 1 except that the water dispersion of the polyurethane resin (U1) obtained in Production Example 1 was substituted with the methyl ethyl ketone solution of the polyurethane resin (U3) obtained in Production Example 3. The results are also shown in Table 1.

### Comparative Example 1

The conditions were the same as in Example 1 except that the water dispersion of the polyurethane resin (U1) obtained in Production Example 1 was substituted with the methyl ethyl ketone solution of the polyurethane resin (U'1) obtained in Comparative Production Example 1. The results are also shown in Table 1.

### Comparative Example 2

The conditions were the same as in Example 1 except that the water dispersion of the polyurethane resin (U1) obtained in Production Example 1 was substituted with the methyl ethyl ketone solution of the polyurethane resin (U'2) obtained in Comparative Production Example 2. The results are also shown in Table 1.

### Industrial Applicability

The decorative molding film of the present invention can be advantageously used in decorating building materials, cellular phones, electrical appliances, game machine components, automotive parts, and the like, and in addition to these applications, it can also be advantageously used in applications requiring aesthetic designs as well as functionalities such as scratch resistance and weather resistance.

## Claims

1. A decorative molding film having a laminated structure in which a protective layer is disposed on at least one surface of a substrate film, wherein
the substrate film has a structure in which a layer comprising a resin PA (PA layer) and a layer comprising a resin PB (PB layer) are alternately laminated each by at least 50 layers, each layer having a thickness of 0.03 µm to 0.5 µm, wherein the resin PA and the resin PB have different average in-plane refractive indices, the average in-plane refractive index of the resin PA being relatively higher than the average in-plane refractive index of the resin PB; and
the protective layer comprises a polyurethane resin (U) formed from at least an active hydrogen component (A) and an organic isocyanate component (B) and having a polycarbonate skeleton containing an alicyclic hydrocarbon group, and satisfies at least one of Condition (1) and Condition (2):
Condition (1): the polyurethane resin (U) contains an alkoxysilyl group and/or a silanol group in its molecule; and
Condition (2): the polyurethane resin (U) contains a carboxyl group and/or a salt thereof, and the protective layer further contains a compound (X) containing a glycidyl ether group, and an alkoxysilyl group and/or a silanol group.

2. The decorative molding film according to claim 1, wherein the difference between the average in-plane refractive index of the resin PA constituting the PA layer and the average in-plane refractive index of the resin PB constituting the PB layer is 0.01 or more.

3. The decorative molding film according to claim 1 or 2, wherein the substrate film has an absolute reflectance of 30% or more at any wavelength in a wavelength range of 400 to 800 nm.

4. The decorative molding film according to any one of claims 1 to 3, wherein the difference in glass transition temperature between the resin PA and the resin PB is 20°C or less.

5. A decorative molded article obtained using the decorative molding film according to any one of claims 1 to 4.
